# EUROPEAN PATENT APPLICATION

(11) **EP 1 291 875 A2**
(43) Date of publication of application: **12.03.2003**
(21) Application number: 02255469.5
(22) Date of filing: 05.08.2002
(51) Int. Cl.: G11B 27/031, G11B 7/00, G11B 20/10

(54) **A method and system for write clock synchronization in a data storage system**

(30) Priority: 06.08.2001 US 923737
(71) Applicant: Hewlett-Packard Company, Palo Alto, CA 94304 (US)
(72) Inventor: Fischer, Michael C., Palo Alto, CA 94303 (US); Hogan, Josh, Los Altos, CA 94022 (US)
(74) Representative: Tollett, Ian

(57) **Abstract**

A method for synchronizing newly recording data with previously recorded data. The method is implemented within a disk-based data storage system. A first difference between a wobble reference signal and previously recorded data is measured (301). Test data are written on a test track to measure a second difference between the wobble reference signal and the test data (302). The test data is written synchronously with a write clock. An offset value is determined by comparing the first different and the second difference (303). New data re written using the write clock and the offset value such that the new data are synchronized with the old data (304). To determine the offset value, the test data can be written to the test track with a write clock calibration delay set to zero, the test data can then be read from the test track and the first difference can be subtracted from the second difference to determine the offset value for the write clock calibration delay. A delay offset can be inserted into a wobble-to-laser path to cause the new data to have the same epoch as the previously recorded data. An error value can be checked to determine whether the error value is within predetermined limits, wherein the error value is the difference between the first difference and the second difference. The write clock can be adjusted in accordance with the error value if the error value is outside the predetermined limits (307).

## Description

The present invention relates generally to data storage systems. More particularly, the present invention relates to a method and system for editable data storage removable or non-removable non-volatile media.

Computers are being used today to perform a wide variety of tasks. Many different areas of business, industry, government, education, entertainment, and most recently, the home, are tapping into the enormous and rapidly growing list of applications developed for today's increasingly powerful computer devices. Computers have also become a key technology for media distribution (e.g., video and audio entertainment), data storage, and trend analysis between and among business professionals.

Non volatile data storage devices are an essential component of modern computer systems. Particularly, disk based storage systems are widely used for their relatively large capacity and fast access times. Examples include magnetic disk media (e.g., hard disk drives, floppy drives, etc.) and optical disk media (CD, DVD, VCD, etc.) To increase capacity, removable storage is used, wherein storage media can be removed from the drive unit and separately indexed and stored. The more widely used examples include CDs and DVDs.

There is increasing interest in making the removable disk formats rewriteable, or editable. The earliest formats for DVDs were not rewriteable. In order to enable editing, the format must support the insertion of replacement data in the midst of older data. For example, in a DVD, data is laid down across the surface of the disk along track (e.g., that spirals from the inside of the disk to the outside). The individual bits of data are delineated by a boundary. The boundary is synchronous with a clock frequency (e.g., a write clock frequency or read clock frequency). In order to allow editing, that is the insertion of replacement data in the midst of the older data, the clock that determines the bit boundaries of the new data must be synchronized to the corresponding clock of the contiguous old data, both at the beginning and end of the new data.

One prior art solution simply includes a large amount of "open space" at the beginning and end of the replacement data. This provides a large amount of margin, wherein the device's circuits can re-acquire the different clock frequency of the replacement data. However, the large margins consume an excessive amount of disk capacity, especially in a case where numerous rewrites are made.

In addition the DVD ROM spec is not designed to deal with the open spaces in the data. Therefore a techniqe that doesn't require such open spaces reduces the incompatibility with DVD ROM discs written in accordance with the DVD ROM specification, in addition to saving space.

Thus, to implement a rewriteable format (e.g., rewriteable DVD), there must be some sort of timing reference available in the format of the media in which the data are to be stored, and there must be a means to bring the write clock into synchronism with the old data bit clock timing. The present invention provides a novel solution to the above requirements.

The present invention is a method and system for implementing a rewriteable format for disk based data storage devices. The present invention takes advantage of a timing reference available in the disk format of the media in which the data are to be stored, and uses this reference to bring the write clock into synchronism with the old data bit clock timing.

In one embodiment, the present invention is implemented as a method for synchronizing newly recorded data (e.g., new rewrite data) with previously recorded data (e.g., old data) in a disk-based data storage system (e.g., a rewriteable DVD device). A first difference between a wobble reference signal, or wobble track, embedded on the disk and previously recorded data is measured. Test data is written on a test track to measure a second difference between the wobble reference signal and the test data. The test data is written synchronously with a write clock. An offset value is determined by comparing the first difference and the second difference. New data is then written using the write clock and the offset value such that the new data is synchronized with the old data.

To determine the offset value, the test data can be written to the test track with a write clock calibration delay set to zero, the test data can then be read from the test track and the first difference can be subtracted from the second difference to determine the offset value for the write clock calibration delay. A delay offset can be inserted into a wobble-to-laser path to cause the new data to have the same epoch as the previously recorded data. To ensure proper operation, an error value can be checked to determine whether the error value is within predetermined limits, wherein the error value is the difference between the first difference and the second difference. The write clock can be adjusted in accordance with the error value if the error value is outside the predetermined limits.

The present invention is illustrated by way of example and not by way of limitation, in the Figures of the accompanying drawings and in which like reference numerals refer to similar elements and in which:
Figure 1 shows a diagram of a wobble track of a disc media in accordance with one embodiment of the present invention.
Figure 2 shows a graphical depiction of the relationship between a number of epochs and time intervals of both old data and new data of a disc media in accordance with one embodiment of the present invention.
Figure 3 shows a flowchart of a basic synchronization process in accordance with one embodiment of the present invention,
Figure 4 shows a flowchart of a synchronization process as performed by a disc reader/recorder device for both blank disc media and recorded disc media in accordance with one embodiment of the present invention.
Figure 5 shows a diagram of a disc reader-recorder device in accordance with one embodiment of the present invention.

Reference will now be made in detail to the embodiments of the invention, examples of which are illustrated in the accompanying drawings. While the invention will be described in conjunction with the preferred embodiments, it will be understood that they are not intended to limit the invention to these embodiments. On the contrary, the invention is intended to cover alternatives, modifications and equivalents, which may be included within the scope of the invention as defined by the appended claims. Furthermore, in the following detailed description of the present invention, numerous specific details are set forth in order to provide a thorough understanding of the present invention. However, it will be obvious to one of ordinary skill in the art that the present invention may be practiced without these specific details. In other instances, well known methods, procedures, components, and circuits have not been described in detail as not to obscure aspects of the present invention unnecessarily.

Embodiments of the present invention are directed towards a method and system for implementing a rewriteable format for disk based data storage devices. The present invention takes advantage of a timing reference available in the disk format of the media in which the data are to be stored, and uses this reference to bring the write clock into synchronism with the old data bit clock timing. In one embodiment, this timing reference is the wobble track of a disk media. The present invention and its benefits are further described below.

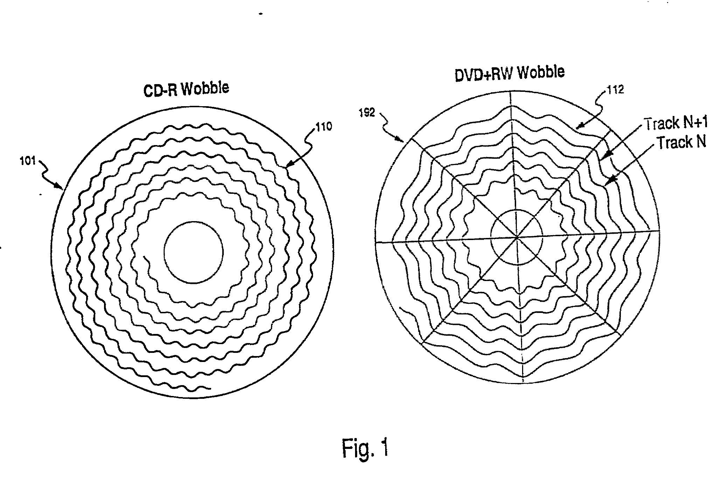

Figure 1 shows diagrams of a wobble track 110 and 112 of a CD-R type disk media 101 and a DVD+RW type disk media 102. The wobble tracks 110-112 are used by a disk reader/recorder device to generate a wobble reference signal, which is used to obtain information about the data encoded on the disk (e.g., timing references, etc.). The wobble reference signal is obtained from the disk media by, for example, monitoring a servo output signal of a read head as the read head tracks the wobble track during disk rotation.

In a disk based data storage system, in order to allow editing or the insertion of newly written data (e.g., overwriting or replacing existing data or inserting between or among existing data blocks), the clock that determines the bit boundaries of the new data must be synchronized to the corresponding clock of the contiguous old data, both at the beginning and end of the new data. This clock is used to sample the bit areas of the data track of the disk. As is known by those skilled in the art, when data is written to the disk (e.g., when the disk was originally pressed or manufactured), the data was written synchronously with a write data clock, such that the bit boundaries are synchronous and periodic, in accordance with the write data clock.

The present invention uses the wobble reference signal to obtain a timing reference for the media in which the data are to be stored. The wobble reference signal is used to bring the write clock into synchronism with the old data bit clock timing. Although embodiments of the present invention are described in the context of a wobble reference signal obtained from a wobble track, it should be noted that other suitable references can be used to provide the timing reference.

Referring still to Figure 1, with a suitable reference and a write clock synchronizer, edit gaps between the newly written data and the adjacent old data can be eliminated, with the clock phases between the two close enough for the clock recovery PLL circuit of the disk reader/recorder device to maintain lock. This also enchances compatibility with DVD ROMs written in accordance with the DVD ROM standard. Ideally the clock error between old data and new data would be much less than the jitter specification for the device, so that the perturbation of the edit break would not affect the error rate of the read channel.

It should be noted that when the write clock is generated from the wobble signal, the time delay offset between the written marks and the wobble clock must be calibrated and adjusted to match the phase of the old data. This requires means to measure the timing offset and a means to adjust the timing offset of the write clock pulses.
In the present embodiment, there are three signals that must be involved in the synchronization:
1. Recovered wobble reference;
2. Read data clock, from old and new data; and
3. Write clock to laser driver
The time of occurrence of the edges in these clock streams may be referred to as their phase or "epoch". In order to describe one embodiment of the synchronizer method in detail, an example context such as the DVD rewriteable format is used. In this format, the three signals listed above are all at the same frequency, the data clock frequency, 27.791016 Mbit/s, at a scanning velocity of 4.90 in/s, as per the DVD+RW 97 Nov spec.

Next, to describe the operation of the synchronizer in achieving synchronism, the following epochs and time differences are defined:
twb = epoch of wobble data clock (e.g., a wobble reference signal) as recovered by the wobble clock recovery PLL;
tro epoch of old data as read and recovered by the read channel data clock recovery PLL;
dto = difference or offset between twb and tro;
trn = epoch of data newly written with dtw = 0, for calibration;
dtn = difference or offset between twb and trn;
twc = epoch of write clock as applied to laser driver;
dtw = delay offset added to the path from twb to twc;

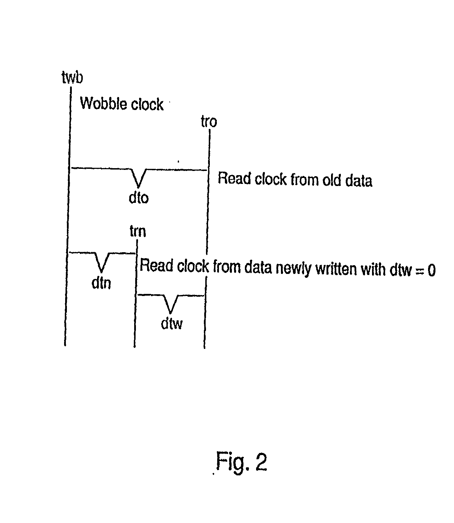

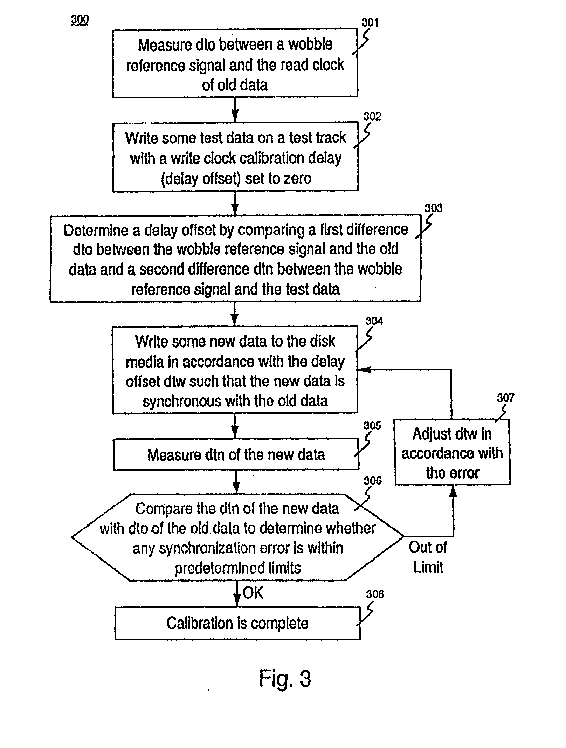

Figure 2 shows a graphical depiction of the relationship between the above defined epochs and time intervals. The graphical depiction shows time advancing from left to right. As shown in Figure 2, dto is the difference between the read clock of the old data (e.g., the write clock at which the old data was originally written), expressed as tro, and the wobble clock twb. The test data is written (e.g., on a test track of the disk) with a write clock having a dtw of zero. The term trn is the read clock derived from the newly written data. The term dtn is the difference between the write clock of the test data, trn, and the wobble clock twb. As shown in Figure 2, subtracting dtn from dto yields dtw, the delay offset to be added to the write clock for newly written data in order to ensure synchronization with the old data. Thus, Figure 2 illustrates the relationships that allow the synchronizer of the present embodiment to determine and set the delay that it inserts in the wobble-to-laser path to cause newly written data to have a clock phase in synchronism with old data. The basic steps of the process are shown in the flowchart of Figure 3 below.

Figure 3 shows a flowchart of the steps of a synchronization process 300 in accordance with one embodiment of the present invention. Process 300 shows the basic steps involved in a synchronization process for new and old data (e.g., as graphically depicted in Figure 2).

Process 300 begins in step 301, where a first difference dto between a wobble reference signal and the read clock of old data is measured. In step 302, some test data is written to a test track (e.g., scratch track, etc.) with a write clock calibration delay set to zero. In step 303, a second difference dtn between the wobble reference signal and the test data is determined. A delay offset dtw is then determined by comparing dto and dtn.

Referring still to Figure 3, in step 304, some new data is written to the disk media in accordance with the delay offset dtw such that the new data is synchronous with the old data. In step 305, the dtn of the read clock of the new data is measured. In step 306, dtn of the new data is compared with dto of the old data to determine whether any synchronization error is within predetermined limits (e.g., the jitter specification of the reading device's PLL circuits). In step 307, where the synchronization error is outside specification, the new data write clock dtw is adjusted accordingly, and process 300 proceeds back to step 304. If the synchronization error is within specification limits, process 300 proceeds to step 308 where the calibration is complete, and new data is written synchronously to the media using the calibrated dtw.

In one embodiment, as writing is done on the disk media, periodic read-backs can be accomplished to check whether dtw needs to be changed, while the error is still within an allowable window as determined in step 304.

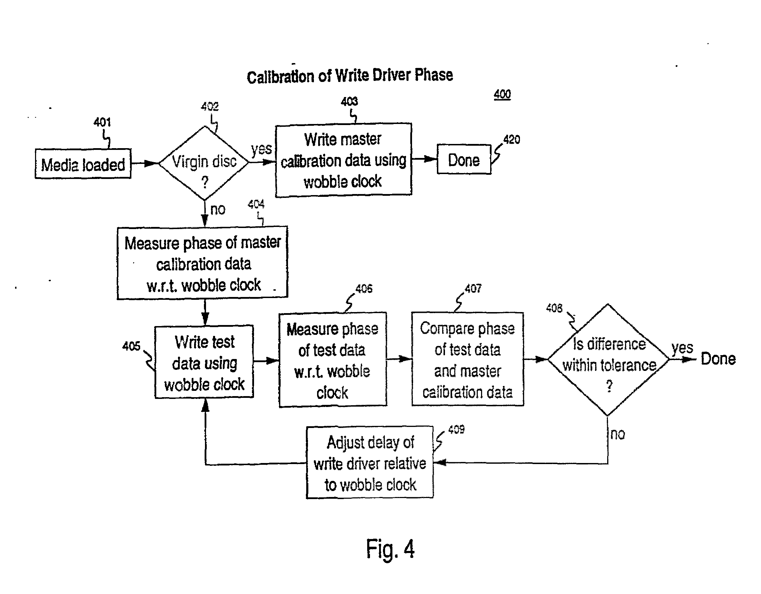

Figure 4 shows a flowchart of a process 400 for a calibration of a write driver phase of a disc reader/recorder device. As with process 300 of Figure 3, process 400 performs write synchronization of new data with old data on a disk media. Process 400 is substantially similar to process 300, however, process 400 shows more specific steps 401-409 as performed by the disc reader/recorder driver.

Steps 401-403 and step 420 show the process when writing to a blank "virgin" disk having no prerecorded data. Steps 402, and steps 404-409 show the process when writing to a disc containing old data and the calibration of the write clock for the new data to ensure synchronization.

Thus, the present invention is directed towards a method and system for implementing a rewriteable format for disk based data storage devices. The present invention takes advantage of a timing reference available in the disk format of the media in which the data are to be stored, and uses this reference to bring the write clock into synchronism with the old data bit clock timing.

The measurement and adjustment means in a disc reader/recorder device in accordance with one embodiment of the present invention is now discussed.

In one embodiment, the frequency of the data clock is 27.8 Mb/s at 4.9 m/s, corresponding to 0.1763 micron/bit, 0.53 microns for a 3T mark. The period of this clock, l/(27.8E6) = 36 ns, is the basis for the jitter spec limit of 8 % = 2.9 ns.

In this embodiment, if an all-digital measurement were implemented with precision of 1 ns, then the clock rate of the counter performing the time interval measurement would have to be 1 GHz. While this is within the state of the art, it is sufficiently demanding that it is not economically practical. Further, since precision to one nanosecond is quite crude and will contribute significantly to the jitter budget, then it is necessary to achieve sub-nanosecond precision. Therefore, combined analog and digital means for measuring and setting delay time intervals are required.

The time interval measurements can be accomplished with a circuit that charges a capacitor at a rapid linear rate during the time interval to be measured. Then an A-to-D converter can read the voltage on the capacitor with precision corresponding to 100 ps easily.

For the adjustable delay function, a D-to-A converter can drive the control voltage input of an analog voltage controlled monostable multivibrator. For example, see US Patent 3403268.

Using analog circuits for these functions raises the issue of the accuracy of the time difference measurements, and the delay adjustment. Without calibration, by design these functions can be performed to about 5 % accuracy. If the time difference or delay is as much as 20 ns, then the raw accuracy is +/-1 ns. At this point analog looks no better than digital, just cheaper and higher precision. With analog techniques and 8 bit ADC and DACs we can measure and set delays to 1/256 of 40 ns which is 0.16 ns precision, even though there may be an error of 1 ns due to offset or non-linearity.

However, these analog quantities will be consistent, so that when dtn is checked and found to be equal to dto, it can be assured that the desired synchronization has been obtained. Further, the error incurred in an initial setting of the delay can be reduced to negligibility by repeating the process, i.e. it can be expected to converge quickly on the desired value because it has an error of only 5 % on each iteration.

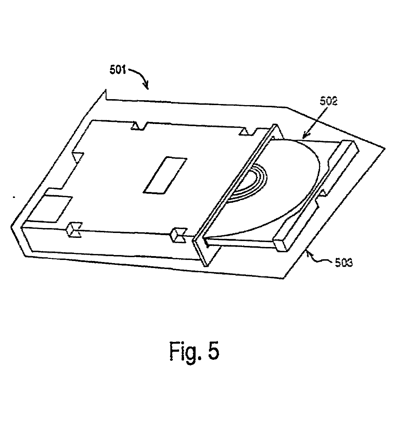

Figure 5 shows a diagram of a disc reader/recorder device 501 in accordance with one embodiment of the present invention. As depicted in Figure 5, device 501 includes a tray mechanism 503 which loads and unloads a disc media 502. The embodiments of the device 501 can be configured to read/write compact discs (Cds), DVDs, minidisks, or the like. The disc reader/recorder device 501 includes the disc reading and recording means, the timing circuitry means (e.g., write and read clock PLLs, etc.), and the like required to implement the functions of the present invention (e.g., process 300 and process 400).

The foregoing descriptions of specific embodiments of the present invention have been presented for purposes of illustration and description. They are not intended to be exhaustive or to limit the invention to the precise forms disclosed, and obviously many modifications and variations are possible in light of the above teaching. The embodiments were chosen and described in order best to explain the principles of the invention and its practical application, thereby to enable others skilled in the art best to utilize the invention and various embodiments with various modifications as are suited to the particular use contemplated. It is intended that the scope of the invention be defined by the claims appended hereto and their equivalents.

## Claims

1. A method for synchronizing newly recorded data with previously recorded data in a disk-based data storage system, comprising the steps of:
a) measuring a first difference between a wobble reference signal and previously recorded data (301);
b) writing test data on a test track to measure a second difference between the wobble reference signal and the test data, the test data written synchronous with a write clock (302);
c) determining a delay offset by comparing the first difference and the second difference (303); and
d) writing new data using the write clock and the delay offset such that the new data is synchronized with the old data (304).

2. A method as claimed in Claim 1 wherein step b) further includes the steps of:
writing the test data to the test track with the delay offset set to zero (302);
reading the test data from the test track (303);
subtracting the first difference from the second difference to determine the delay offset for the write clock calibration delay (303).

3. A method as claimed in Claim 1 or 2 wherein step d) further includes the step of inserting the delay offset into a wobble-to-laser path to cause the new data to have the same epoch as the previously recorded data.

4. A method as claimed in any of Claims 1 to 3 further including the step of checking whether an error value is within predetermined limits (306), wherein the error value is the difference between the first difference from step a) and the second difference from step b).

5. A method as claimed in Claim 4 further including the step of adjusting the write clock in accordance with the error value, if the error value is outside the predetermined limits (307).

6. A disc based data storage system for editing old data on a disc media with new data, comprising:
a) means for measuring a first difference between a wobble reference signal and previously recorded data (501);
b) means for writing test data on a test track to measure a second difference between the wobble reference signal and the test data, the test data written synchronous with a write clock (501);
c) means for determining a delay offset by comparing the first difference and the second difference (501); and
d) means for writing new data using the write clock and the delay offset such that the new data is synchronized with the old data (501).

7. A system as claimed in Claim 6 wherein the means for writing test data on a test track to measure a second difference between the wobble reference signal and the test data, further comprises:
means for writing the test data to the test track with the delay offset set to zero (501);
means for reading the test data from the test track (501);
means for subtracting the first difference from the second difference to determine the delay offset for the write clock calibration delay (501).

8. A system as claimed in Claim 6 or 7 wherein the means for writing new data using the write clock and the delay offset such that the new data is synchronized with the old data further includes means for inserting the delay offset into a wobble-to-laser path to cause the new data to have the same epoch as the previously recorded data(501).

9. A system as claimed in any of Claims 6 to 8 further comprising means for checking whether an error value is within predetermined limits, wherein the error value is the difference between the first difference and the second difference (501).

10. A system as claimed in Claim 9 further comprising means for adjusting the write clock in accordance with the error value, if the error value is outside the predetermined limits (501).
